# EUROPEAN PATENT APPLICATION

(11) **EP 2 889 825 A1**
(43) Date of publication of application: **01.07.2015**
(21) Application number: 14001175.0
(22) Date of filing: 28.03.2014
(51) Int. Cl.: G06Q 30/02

(54) **Automated unobtrusive scene sensitive information dynamic insertion into web-page image**

(30) Priority: 26.12.2013 US 201314140749
(71) Applicant: Redol, Joao, 1600-35 Lisboa (PT); Lopes Lemos, Mauro Fernandes, 1600-35 Lisboa (PT); de Jesus Vaz Luis, Rui Manuel, 1600-35 Lisboa (PT)
(72) Inventor: Redol, Joao, 1600-35 Lisboa (PT); Lopes Lemos, Mauro Fernandes, 1600-35 Lisboa (PT); de Jesus Vaz Luis, Rui Manuel, 1600-35 Lisboa (PT)
(74) Representative: Berg, Selwyn Solomon

(57) **Abstract**

The algorithm components of the AUTOMATED UNOBTRUSIVE SCENE SENSITIVE INFORMATION DYNAMIC INSERTION INTO WEB-PAGE IMAGE synergistically operate to permit an automatic dynamic insertion of an Advertising Segment into a picture within a user/viewer selected publication without distracting from the content of interest of that picture .The algorithm subroutines analyze each web page for locations in a publication picture to deposit the advertisement, locates a group of pixel locations of adequate size and geometry for that advertisement that does not interfere with the image content of that picture, and embeds the advertisement with an interaction subroutine that permits the user/reader to obtain information about the product. If proper sequences of pixels are found, the advertisement can move within the picture to attract the attention of the targeted user/reader. The user/reader metadata assures an effective customer targeting. The dynamically integrated advertisement does not conflict with the content of interest in the picture.

## Description

### BACKGROUND OF THE INVENTION

### 1). Proposed Field Classification.

The field of invention is primarily in CLASS 345, Computer graphics processing and selective visual display systems, CLASS 382, image analysis and involves CLASS 707, Data processing: database and file management or data structures. The potential subclasses are too numerous to mention as data processing covers many sub-disciplines.

### 2). Introductory Information And Related Art

The publications of periodicals are going through a historical change. Initially, such publications, be it newspapers or magazines, were reasonably geographically localized. However, as publications became nationally syndicated, there were often local distributors which obtained advertisements from business entities who were in the vicinity of the local distribution of the publication though the newsworthy information or magazine articles were the same nationally. The master copy of the periodical had blank sections which were reserved for interchange of any local advertisement. This was necessary since the profitability of any publication depended primarily upon the advertising and not the cover price that the reader/User paid for the publication.

The impact of internet communications has resulted in a loss of readership which has cut deeply into the desirability of using periodicals as advertising media. Currently, the periodicals have elected to continue to publish through the Internet and eliminate the costs of printing and distribution. There is a need for an algorithm which can recognize a space for placement of advertisement and fit an appropriate advertisement in that space. By the use of metadata derivable from Big Data it is now possible to target customers who tap into the internet for their current subscriptions to their internet periodical publications. Such advertisements can target ideal customers for products they favor and are quite effective in promoting and selling the product.

Advertising is a main source of revenue for such periodical distributors who are now Internet companies (Sources) operating communication channels on the ubiquitous Internet.

Some companies have their operation based solely on advertising income. With the constantly growing number of communication devices (e.g.: Smart TV set, a mobile device, a laptop, a PC or a tablet.), the target audience is accessible over many of these communication channels. The Periodical Publication Internet is the central communication provider of magazine article Sources using these various communication channels and advertising is the main way these Sources make a profit. Targeting potential customers (Users) connected with their mobile communication devices to the Internet has made inserted online advertising a major avenue to get public exposure. The traditional approach of using pop-ups has now been mostly blocked by internal programs. This disclosure describes a automated method using an algorithm to find and insert advertisements pertinent to the reader/User of a periodical in any distribution area.

The proposed algorithm obviates Web-pages owners assigning specific places in their pages for advertisement, which frequently end up confining advertising far away from the content of interest or in secondary places that are diminishing the effectiveness of the advertisements. User's are so used to see the advertisements in such specific spaces, hidden or disconnected from the content of interest that they end up automatically ignoring the advertisements, so called "ad blindness". User's grow accustomed to separating the advertisement from the content of the page, becoming blind to all sorts of advertising in the web-pages. The design objective of an advertisement is characterized by capturing the User's attention and at the same time avoiding being so overwhelming that the advertisement become annoying and distractive. Thus, there is a need to find ways of maintaining the integrity of the non-advertising content and concurrently capturing the user's attentiveness. Such designed advertisements have to be automated because of the diversity of interests of a readership. Big Data is a useful tool in such automated targeted design

Disclosed herein is a process providing Advertisers the possibility of displaying advertisements integrated/embedded in the web-page images, in a non-obtrusive way, without distracting or annoying the user; nevertheless, at the same time, capturing their attention, avoiding the ad blindness effect and maximizing the advertising effectiveness. Moreover, this method does not require manual changes in the web-page or disruption of the periodical article on the page.

### A)Prior Art.

The rapidly growing area of digital video presentations has produced a crowded art of somewhat ambiguous innovations. Of the many published applications and the few granted patents, it is noted that Microsoft in its US 2009/0171787 A1 of July 2, 2009 for a IMPRESSIONATIVE MULTIMEDIA ADVERTISING by Mei et al. (Microsoft assigned) describes an advertisement based upon interaction of the viewer with an online source medium (e.g. photo). This method attempting to capture the User's attention fails to find a non-obtrusive area for advertising.

In US 20120201470 A1 by Pekar et al. of August 9, 2012 for the RECOGNITION OF OBJECTS a method for real-time automatic recognition of objects within a digital image or a sequence of images is disclosed, and also fails to find a non-intrusive spot for the advertisement which will capture the viewer's attention.

In US 2005/0018216 A1 by Barsness et al. of January 27, 2005 for an APPARATUS AND METHOD TO ADVERTISE TO THE CONSUMER BASED OFF A DIGITAL IMAGE a system is disclosed for "analyzing a digital image for consumer identifying characteristics, and generating advertisements specifically targeted to the consumer based on the identifying characteristics within the digital image." In this invention the digital image is analyzed in order to generate advertisements, but narrowly directed to targeted advertisement and an apparatus such as a photo kiosk or digital minilab.

In the US 7352912 B2 of Apr. 1, 2008 for a METHOD FOR AUTOMATICALLY DETERMINING A REGION OF INTEREST FOR TEXT AND DATA OVERLAY by Eschbach, a method is disclosed for identifying automatically a region of interest of an image, avoiding overlay content in this region. However, no automated insertion of information is disclosed. This shortcoming is alleviated in US 6711291 B1 by Stubler et al. of Mar. 23, 2004 for a METHOD FOR AUTOMATIC TEXT PLACEMENT IN DIGITAL IMAGES which simply describes a limited method for placing caption, text or figurative element in a digital image.

On another approach Pong in US 7231651 B2 of Jun. 12, 2007 for a SYSTEM AND METHOD FOR INSERTION AND MODIFICATION OF ADVERTISEMENTS highlights the importance of blending into advertisements in entertainment programs without disrupting the program or display with a method and system for designating specific images or fields for such images in the program for the display of advertisements. However, there is no targeting from User metadata.

There is a plethora of algorithms and systems for gyrating texts in documents but no functioning system was found which accomplishes the goals as effectively as the within Specification which is currently operating successfully in the applicants'41aboratory and fits the current state of the periodical publication industry.

Moreover, active participation in the industry and alertness to R&D innovations has not indicated any existing applied technology that matches the performance of this proposed AUTOMATED UNOBTRUSIVE SCENE SENSITIVE INFORMATION DYNAMIC INSERTION INTO WEB-PAGE IMAGE. In particular, marketing research has indicated a need for a novel approach to insertion of advertisements that capture the attention of a User and has resulted in the within development of a novel DYNAMIC method of insertion of appropriate advertisements.

### INVENTION SUMMARY.

An objective of the within invention is in implementing a process for DYNAMICALLY integrating/embedding advertisement inside existent images located in a web-page (Web-page Image), avoiding the areas in such images that are considered to be important to the viewer, i.e; a web-page having a image showing a football player performing a toss, the advertisement would be placed on or dynamically along the trajectory of the football on the publication picture without disturbing the action.

Web-page periodicals contain many and different elements, such as text documents, tables, images, videos etc., and a combination of most of these elements. The herein described algorithm processes goes through all the web-pages the User is accessing (even dynamic ones), searching for images of a certain size and automatically inserting advertisements in those images. These advertisements are often DYNAMIC and always interactive allowing User's to interact by touching or clicking in the advertisement.

The advertisement can be an Advertising Segment which may be either a playlet promoting the product or brief advertising text (as would be found on a poster sign) or an image (static or animated) or a video.

Such advertising should blend non-intrusively in any image in a web-page so as not to obfuscate any main points of the image of the website. However, in apparent discongruity, it also must catch the User's attention. The flattened presentation appears on the User's Monitor which may be any kind of device that has a operating system and display such as mobile phones, tablets as well as computers.

The present invention embodies a process comprising the following steps:
a. upon receiving the web-page reference link, searching for all images with a configurable minimum size susceptible of advertisement insertion within the content of the web-page;
b. by the size and content of the images (assessed one by one), an automatic analysis is made, finding the best spot to insert advertising using an algorithm and method programmed to finding appropriate areas for the advertising media that does not disturb a main scene of the image of the USER web-page by selecting an image with the same background color, texture, object (i.e.; building, wall) or blurred area, so a layer image of advertising digital media will blend non-obtrusively;
c. choosing from an advertisements listing an advertisement and embedding it on top or overlay of the spot defined in each Web-page Image targeting the advertisement fitting the User Profile metadata; and- if possible,- makes a DYNAMIC insertion which permits the advertisement to move in the selected image to catch the User's attention, and
d. the advertisements are interactive, allowing the User to touch/click it.

The within invention AUTOMATED UNOBTRUSIVE SCENE SENSITIVE INFORMATION INSERTION INTO WEB-PAGE IMAGE embodies a process which allows a User visiting any website to view the images contained in the web-page with integrated/embedded non-obtrusive advertising digital media (Advertising Segment). However, the User views the original image with an integrated/embedded Advertising Segment compatible with the interests of the User which was automatically placed in an optimum spot and does not disturb the scene of the image. This algorithm process occurs on every page the reader/User accesses that have spots the placement algorithm subroutines can find. Because each Web Page is unique and associated with the refresh rate of the Monitor, there can be a path of consecutive pixels that can house the Advertisement Segment so the User views a dynamic display that is more likely to get his attention, but still not obscure the content of interest to the User: this is characterized by the term DYNAMIC display of the Advertisement Segment. These subroutines are synergistic in that they produce a novel result that is greater than the known constituent parts.

When the Advertising Segment shows up in the Images contained in the User's chosen web-page, he will be able to manually click on a button or store the Advertising Segment pertaining to the business of the Advertiser. This is a routine procedure known and used by all who use any of the available communication devices. The within method is characterized by the absence of any kind of human intervention as well as off-line preprocessing, which means that the present method will automatically analyze the web-page, searching and choosing images for advertisement insertion in real time when the web-page reference link is received.

### OVERALL BASIC DESCRIPTION OF THE INVENTION PROCESSES

The invention primarily comprises four process components of the (A) **network solution architecture** which are, (B) **Web-page Image Finder Process** component to find images in the web-pages (C) **SpotFinder Process** component for finding the best spot in an image (D) **Embedder Process** presentation component for viewing the image with inserted advertising digital media (E) **Interaction Process** component for interacting with the Advertising Segment. Each of these programming components is briefly described as follows:

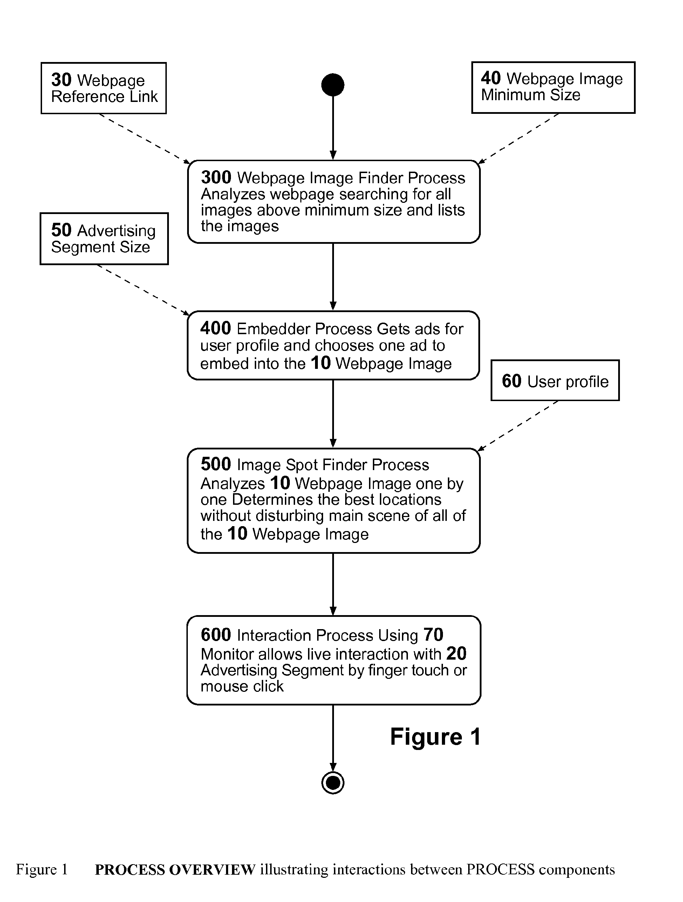

### A) Network solution architecture illustrated in Figure 1.

The architecture for the overall process has 4 components of
• **300 Web-page Image Finder Process**
• **400 Image Spot Finder Process**
• **500 Embedder Process**
• **600 Interaction Process**
as well as the primary input of the Website Image and Advertising Segment and the necessary output Monitor (which is any device which includes the usual User hardware & software found in all computers). These Processes contain subroutines of I, II and III which processes the following information.

### I. a global advertisement Provider (SOURCE) which stores all metadata about

### a. the advertisement, the producer of the product (ADVERTISER)

b. the target user (USER) (e.g.; name, age, location, gender,),
C. the USER profile (e.g. what the user prefers).
and a internal program which stores the correlations between all this data.

This information is stored in the listings associated with the Advertising Segment.
II. A global content Provider which, stores all digital medial content (the original or reference to image of the Website Image and the inserted advertising digital media of the Advertising Segment by its encoded identification). It is from this global content Provider that the user obtains the content of the web-page.
III. A distributed software algorithm that correlates information between Providers and the AUTOMATED UNOBTRUSIVE SCENE SENSITIVE INFORMATION DYNAMIC INSERTION INTO WEB-PAGE IMAGE algorithm for showing the images contained in the web-page to the User with the advertisements seamlessly embedded in the digital video content.

The advertisement content that is shown to the User is automatically and intelligently determined by correlation software which is most relevant to the target User.
B) Web-page image finding component of the **300 Web-page Image Finder Process** for image content advertisement location detection and insertion. The finding method is accomplished by analyzing the web-page to search for all the images that comply with a minimum size. This method works automatically every time a User accesses a web-page.
C) Image spot finding component of the **400 Image Spot Finder Process** intelligently identifies all the advertisement places/locations within the image that do not affect the scene of the image but still remaining fully integrated in the image in a non intrusive manner. If the image does not contain any spots for inserting advertisements, there will be no advertisement embedding. This method works automatically and does not require any kind of manual intervention.
D) Integration subroutine of advertisements in the image of the **500 Embedder Process** implements viewing of the web-pages images with the embedded advertising by flattening the Advertising Segment onto the top of the Web-page Image. This subroutine assures a fit in the selected space and has compatible color and matte.
E) Interaction subroutine with advertisement in the image of the **600 Interaction Process** which responds to the tactile orders of the USER for additional information on the advertised product. The **600 Interaction Process** component contains the usual subroutines which respond to User tactile interaction. In response to the User tactile control, an overlay Pop-Up advertisement window with Sponsor Details is displayed. This overlay Sponsor Details provides product promotional details, such as:
   - more detailed information of the advertised product via a detailed description or advertisement banner;
   - a link with the possibility of directing the User to the advertiser's URL (Uniform Resource Locator) containing other information and possibilities such as, but not limited to, online shopping;
   - an additional video display of the product's advertising videos or campaigns;
   - information of the nearest store/point where the coupons may be redeemed,
   - possibility of winning discount or any other type of coupons.

### Detailed Insertion Method Description

The method here described performs a series of steps in order to find one or more non-intrusive locations inside the images of the User selected periodical web-page. These locations will then be used for advertising insertion, providing the User a seamless integration between the digital media and advertising content during his viewing experience.

The system analyzes each Web-page Image content and chooses the referred locations based on areas with absence of main scenes for the viewer in the selected image. Within such image the method will be searching for areas with the same background color, texture, object or blurred aspect and embedding a layer of advertising, ordered by the size and type of image which are visible for the User. Most visible locations are picked as they are more effective for displaying advertising, choosing the locations that are bigger (preferred) or closest to the
center of the main scene. Several contiguous areas may be found to allow a DYNAMIC presentation for the Advertising Segment.

The Insertion Method is programmed for
• finding appropriate areas for the advertising media
   o without disturbing the main scene of the image of the USER web-page
      ■ by selecting digital trains of static coding in the Web-page Image
         • which maintain the same background color, texture, object Image Spot Finder Square or blurred areas and position
so the selected layer image of advertising digital media will blend non-obtrusively.

The images will be analyzed one by one, where white space represents areas without main scene and black space represent main scenes.

Upon receiving the information of the areas with and without main scenes (black or white spaces, respectively), the method can follow two possible subprocesses:
1. the method randomly searches possible, non-overlapping, geometric locations identified by Y inside the white space (areas without main scene), storing the location for each Y and verifying the Y nearest to the center of the main scene. With the coordinates of that Y, all spots are stored in a list, which
   - if it is empty, means there is no possible location to insert Advertising Segment;
   - if it contains one spot possible this will be available as output data of best spots list.
   - if, on the other hand, the list contains more than one possible spot, the method will choose the Y that is bigger (preferred) or closest to the center of the main scene and this will be available as output data of best spots list; or
2. the method analyzes all white space (areas without main scene) pixels one by one,
   - outlining all the perpendicular radius around all white pixels until reaching black pixel and
   - determining the biggest radius in average, able to give the biggest possible square inside the Web-page Image..
   - If this square is bigger than the Advertising Segment,
      o the Advertising Segment can be increased to fit the square and capture the Y coordinates to the location list.
   - If the square is not bigger than the Advertising Segment,
      o all spots will be stored in a list which
         - if it is empty, means there is no possible location to insert Advertising Segment;
         - if it contains one spot possible this will be available as output data of best spots list.
   - If, on the other hand, the list contains more than one possible spot, the process
   - will choose the Y that is bigger (preferred) or closest to the center of the main scene and this will be available as output data of best spots list.

This insertion subroutine makes a decision by choosing from the list of spots which is either unique or a list of several of them on a priority of area dimensions and also the spot location in the Web-page Image of the USER selected web-page. If there is not a selection by priority decision, the insertion point will be random.

Finally, this insertion subroutine employing the findings from the described process,
• inserts the composed advertising Advertising Segment digital media layer which
   o is flattened by the **500 Embedder Process**
      ■ onto the top of the Web-page Image.

The composition assures a fit in space and compatible color and matte.

The above descriptions of the functional attributes of the various processes is currently the best mode and not intended to be limited to the descriptive routines as ongoing R&D uncovers program shortcuts which facilitate functionality.

The point of invention herein disclosed is the computer algorithm that describes a novel automated real time insertion of dynamic additional information in any image of randomly selected web-page without manual intervention or pre-processing. Though its commercial value is currently best applied to the periodical publication business for advertising, it has great potential in other industrial applications like Education and Industrial Training.

### BRIEF DESCRIPTION OF THE FIGURES.

The process components shown in Figure 1 are a literal logical statement of the functioning system. The call-outs in the figures follow the declarative programming paradigm. Each subroutine performs specific logical tasks and is titled by underlining that Subroutine. Those versed in the video programming art recognize the procedural programming. The combination of these subroutines are defined as processes and defined in **Bold Format.** The several Processes of Subroutines are synergistic in that they provide a novel result which permits the automated insertion of prepared media (20 Advertising Segment) into the user selected web-page images (10 Web-page Image) without obscuring the content of interest of the image to the viewer of that web-page. Both the 10 Web-page Image and 20 Advertising Segment are in some common codecs which are to be decoded and surveyed in the succeeding **Processes.** The unique herein defined subroutines of the 10 Web-page Image, 20 Advertising Segment and 70 Monitor are actually external to the effective Algorithm that produces the synergistic result of having a AUTOMATED UNOBTRUSIVE SCENE SENSITIVE INFORMATION DYNAMIC INSERTION INTO WEB-PAGE IMAGE but are considered a part of the **Processes** because each **Process** is defined by the particular Subroutines associated with the particular **Process.**

It is important to note that these **Process** components permit a DYNAMIC advertisement placement. Inherent in the media of a Web Page, as distinguished from a printed publication page, is the property that a Web Page Image is renewed at a "refresh rate" as a characteristic of the monitor settings but a printed publication page is static. The various subroutines associated with the **Process** components do have logical statements that permit the 20 Advertising Segment to be dynamically displayed. That is simply that each pixel of each web frame follows a path across the publication picture, but maintains the required geometry to contain the 20 Advertising Segment: i.e.; the 50 Advertising Segment Size is contained within the 40 Web-page Image Minimum Size geometry. If the analysis of the publication picture indicates that it will metrically contain the 20 Advertising Segment, this publication picture becomes a selected picture. The logic associated with such routines is well known in the video animation industry. Consequently, as a novel approach in this AUTOMATED UNOBTRUSIVE SCENE SENSITIVE INFORMATION INSERTION INTO WEB-PAGE IMAGE, not only can the 20 Advertising Segment be a video, but can move around within the statically placed publication picture and still not obscure the informative content of the selected picture. The **600 Interaction Process** permits the User to interact with the floating 20 Advertising Segment so as to obtain 25 Sponsor Details information on obtaining the product. This is all done by the automated Processes inherent in the collective algorithm components.
FIGURE 1
   Figure 1 of the PROCESS OVERVIEW is a general description of the **Processes** that comprise the overall process to obtain the bottom line resultant flattened combination of the input codecs of 10 Web-page Image and 20 Advertising Segment to the viewer's 70

### Monitor.

FIGURE 2
   Figure 2 of the **300 Web-page Image Finder Process** shows the subroutines which analyze the input data of the 30 Web-page Reference Link and 10 Web-page Image to obtain a list of all 10 Web-page Image contained in the web-page to place the 20

### Advertising Segment.

FIGURES 3A and 3B as Figure 3

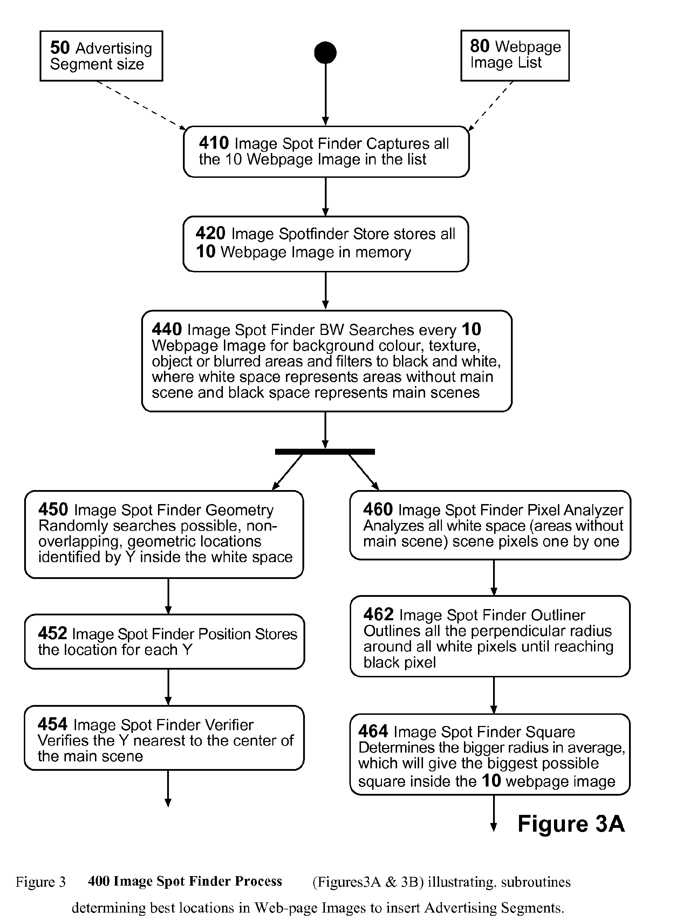

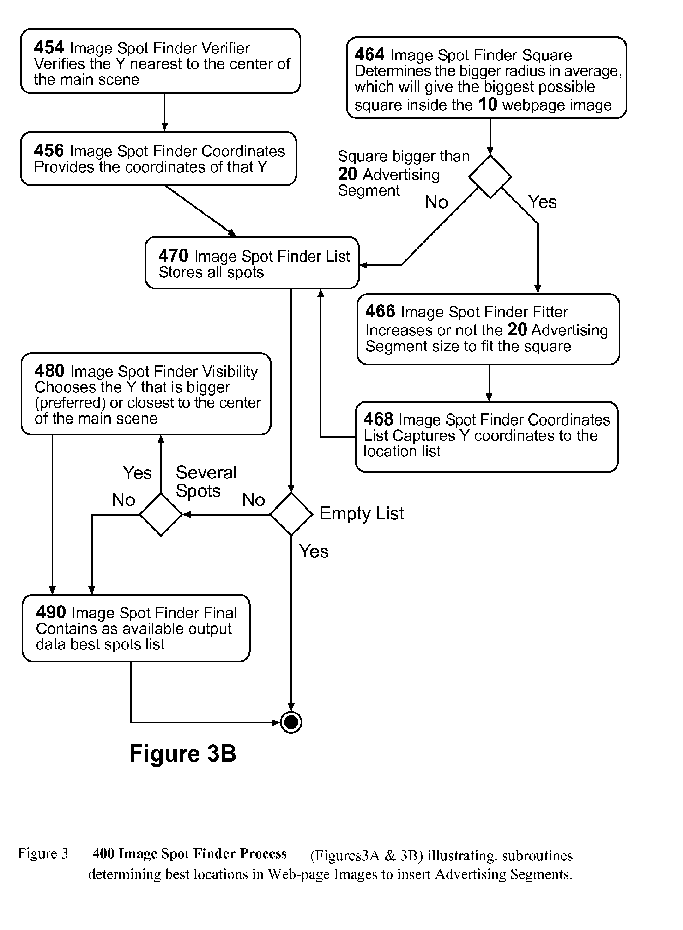

   FIGURES 3A and 3B constitute contiguous figures of one Process which is split into two diagrams for clarity, but described below as just Figure 3.
   Figure 3 of the **400 Image Spot Finder Process** shows the subroutines which intelligently analyze all possible locations to insert the 20 Advertising Segment in a visible but non-intrusive location of the 10 Web-page Image.
FIGURE 4

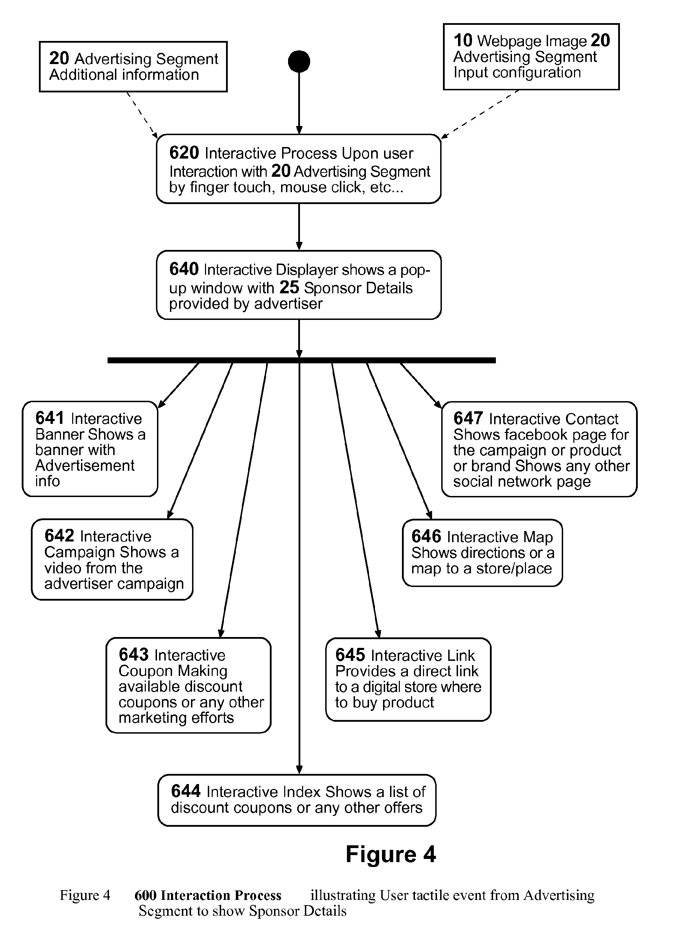

   Figure 4 shows improvement modification of the **600 Interaction Process** subroutines which respond to User tactile interaction on the 10 Web-page Image. Through tactile control selection upon the 20 Advertising Segment, that 20 Advertising Segment will display the pop-up window with 25 Sponsor Details.

### DETAILED DESCRIPTION OF THE FIGURES AND THE INVENTION

In Conjunction with the above explanation of the holistic interactive functioning of the algorithm to achieve a AUTOMATED UNOBTRUSIVE SCENE SENSITIVE INFORMATION DYNAMIC INSERTION INTO WEB-PAGE IMAGE, the following description describes the interactive functioning of the claimed invention.

### FIGURE 1: PROCESS OVERVIEW

Figure 1, titled PROCESS OVERVIEW shows the interactions between the principal **PROCESS** components. Shown are the inputs of the 30 Reference Web-page Link and 40 Web-page Image Minimum Size. These inputs are fed through the **300 Web-page Image Finder Process**, which analyzes the Web-page searching for all images above minimum size and lists all the 10 Web-page Images. The **400 Image Spot Finder Process** receives inputs of the 50 Advertising Segment Size and 80 Web-page Image List from the previous process. With these inputs the **400 Image Spot Finder Process** will analyze all 10 Web-page Image one by one, determining the best locations for inserting 20 Advertising Segment without disturbing main scene of all of the 10 Web-page Image. The locations of the input are then fed to the **500 Embedder Process** which receives as input of 60 User Profile and gets advertisements for user profile and chooses one advertisement to embed into the 10 Web-page Image and outputs those images to the 70 Monitor of the USER.

The **600 Interaction Process** determines the live interaction outcome to the User, using 70 Monitor, this process allows live interaction with the 20 Advertising Segment by finger touch or mouse click.

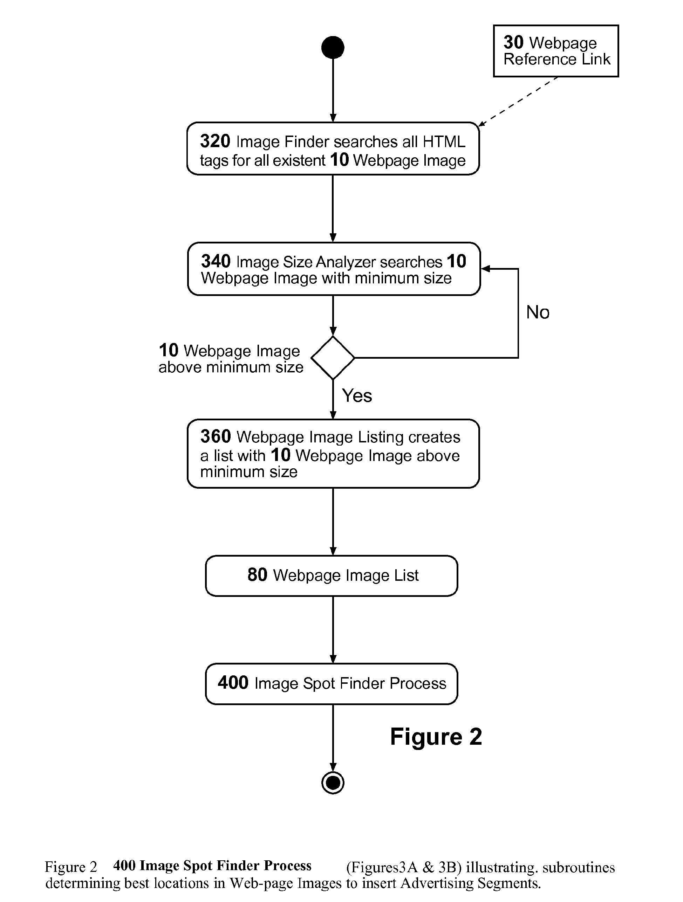

### FIGURE 2: 300 WEB-PAGE IMAGE FINDER PROCESS

Figure 2, titled **300 Web-page Image Finder Process** shows the input of 30 Web-page Reference Link to the 320 Image Searcher, which searches all HTML tags for 10 Web-page Image. The 340 Image Size Analyzer will search all 10 Web-page Image with a minimum determined size. If the 10 Web-page Image is above a minimum size, the 360 Web-page Image Listing creates a list with 10 Web-page Image above minimum size and send the list to the **400 Image Spot Finder Process**. If the 10 Web-page Image is not above a minimum size, the 340 Image Size Analyzer will search the next 10 Web-page Image with minimum determined size.

### FIGURE 3: 400 IMAGE SPOT FINDER PROCESS

Figure 3, shown as Figure 3A and 3B. both titled **400 Image Spot Finder Process,** shows the subroutines for determining the best location in the 10 Web-page Image to insert the 20 Advertising Segment without disrupting the main scene of the image. The inputs from 50 Advertising Segment Size and 80 Web-page Image List (determined through the **300 Web-page Image Finder Process)** are fed to the 410 Image Spot Finder that captures all the 10 Web-page Image in the list and sent to the 420 Image Spot Finder Store which stores all 10 Web-page Image in memory. The 440 Image Spot Finder BW searches in every 10 Web-page Image for contours and filters to black and white, where white space represent areas without main scene and black space represent main scenes. These filters as applied to the publication picture color depth have heuristically set color depth bounds that are determined by the bit depth of the picture rendition. In publication pictures the depth is usually limited to 8 bits which means each of the primary colors are limited to 3 bits each which may be considered as a color static boundary.

With the input of the subroutine 440 Image Spot Finder BW the present process can follow one of two possible paths, depending on the metrics of the space the 20 Advertising Segment must occupy to be readable to the User..

On one hand, subroutine 450 Image Spot Finder Geometry randomly searches possible, non-overlapping, geometric locations identified by Y inside the white space (areas without main scene). The 452 Image Spot Finder Position will store the location for each Y and 454 Image Spot Finder Verifier will verify the Y nearest to the center of the main scene. Upon this, the 456 Image Spot Finder Coordinates provide the coordinates of that Y and the 470 Image Spot Finder List stores all spots. If the 470 Image Spot Finder List is empty, means there is no possible location to insert 20 Advertising Segment into 10 Web-page Image. If the 470 Image Spot Finder List contains one spot possible the next subroutine will be the 490 Image Spot Finder Final which contains as available output data best spots list. If the 470 Image Spot Finder List contains more than one spot the 480 Image Spot Finder Visibility will choose the Y that is bigger (preferred) or closest to the center of the main scene and proceed to the 490 Image Spot Finder Final which contains as available output data best spots list.

On the other path, upon receiving the input of the 440 Image Spot Finder BW the subroutine 460 Image Spot Finder Pixel Analyzer analyzes all white space (areas without main scene) pixels one by one, followed by 462 Image Spot Finder Outliner which outlines all the perpendicular radius around all white pixels until reaching black pixel. Furthermore the 464 Image Spot Finder Square will determine the biggest radius in average, able to give the biggest possible square inside the 10 Web-page Image.

If the square geometry given by the 464 Image Spot Finder Square is bigger than the 20 Advertising Segment than the 466 Image Spot Finder Fitter may increase the 20 Advertising Segment size to fit the square and 468 Image Spot Finder Coordinates List captures Y coordinates to the location list, passing to the 470 Image Spot Finder List.

If the square geometry is not bigger than the 20 Advertising Segment, the next subroutine will be directly 470 Image Spot Finder List, followed by the subroutines 480 Image Spot Finder Visibility and 490 Image Spot Finder Final.

Both paths converge in the 470 Image Spot Finder List where, as mentioned above, if the 470 Image Spot Finder List contains one spot possible the next subroutine will be the 490 Image Spot Finder Final which contains as available output data best spots list. If the 470 Image Spot Finder List contains more than one spot the 480 Image Spot Finder Visibility will choose the Y that is bigger (preferred) or closest to the center of the main scene and proceed to the 490 Image Spot Finder Final which contains as available output data best spots list.

### FIGURE 4: 600 INTERACTION PROCESS

Figure 4, titled **600 Interaction Process** waits for a tactile event from the User with the 20 Advertising Segment inserted into the 10 Web-page Image. The objective of the subroutines in this **600 Interaction Process** is to configure the User interaction with the 20 Advertising Segment showing a pop-up window with 25 Sponsor Details.

The 620 Interactive Process feeds the 640 Interaction Displayer upon user interaction with 20 Advertising Segment by finger touch, mouse click, etc.

The 640 Interaction Displayer subroutines include :
1. the 641 Interaction Banner which shows a banner with Advertisement information,
2. the 642 Interaction Campaign shows a video from the advertiser campaign,
3. the 643 Interaction Coupon which displays discount coupons or any other marketing offers
4. the 644 Interaction Index shows an index of discount coupons and other offers and
5. the 645 Interaction Link provides a direct link to a digital store where to buy the product.
6. the 646 Interaction Map shows directions on a map to the location to buy product,
7. the 647 Interaction Contact shows the FacebookTM page for the campaign, product or brand or any other social network page.

These 640 Interaction Displayer subroutines materialize by tactile command of the User.

## Claims

1. A synergistic algorithm of process components in an AUTOMATED UNOBTRUSIVE SCENE SENSITIVE DYNAMIC INFORMATION INSERTION INTO WEB-PAGE IMAGE program for the dynamic/moving insertion of an Advertising Segment into a publication picture located on a web page of a User Selected publication for viewing on the User's Monitor comprising
a Web-page Image Finder Process which finds a publication picture of size and geometry on each web page that metrically accommodates said Advertising Segment
an Image Spot Finder Process which finds a consecutive sequence of pixels of adequate size and geometry to metrically accept said Advertising Segment within said publication picture that does not obscure the content of said publication picture for the multiple insertion of said Advertising Segment and elects said publication picture as a selected picture
an Embedder Process which does the insertion and flattening of said Advertising Segment into said selected picture
an Interaction Process for displaying information associated with said Advertising Segment to a User
whereby said Advertising Segment is automatically and dynamically combined by the claimed processes as a integral part of said selected picture in said User selected publication without distracting said User from the content of said publication picture giving said Advertising Segment motion within said selected picture and permits said User to interact with said Advertising Segment to obtain product information..

2. An Image Spot Finder Process as described in Claim lof process subroutines comprising
converting an area in said selected picture to white if it contains static color pixel information of color depth in respect to adjacent pixels and converting non-static areas to black if it contains pixel information that differs in color depth in respect adjacent pixels
identifying all consecutive white areas by Y pixel coordinates and indexing said Y pixel coordinates into an Image Spot Finder List
assembling all consecutive Y coordinate pixel areas from said Image Spot Finder List into an Image Spot Finder Visibility index list of area geometry of a maximum radius to accommodate several insertions of the geometry required by said Advertising Segment
whereby said Advertising Segment moves dynamically within said white area of selected picture without interfering with the inherent content from said published picture and said sequence of said insertions is available for said sequential Embedder Process to place said Advertising Segment for insertion into said selected picture giving motion to said Advertising Segment..

3. An Image Spot Finder Process as described in Claim 1 of process subroutines comprising
converting an area in said selected picture to white if it contains static color pixel information of color depth in respect to adjacent pixels and converting non-static areas to black if it contains pixel information that differs in color depth in respect adjacent pixels and placing said pixel information in a Image Spot Finder BW
outlining said entire white space with boundaries including all consecutive white areas to said black space into a Image Spot Finder Square
comparing the metrics of said Advertising Segment to the metrics of said Image Spot Finder Square and if said metrics of said Image Spot Finder Square is greater than the said metrics of said Advertising Segment,
then
putting all pixel coordinates of said Image Spot Finder Square into an Image Spot Finder Visibility index list of area geometry of a maximum size to accommodate several insertions of the geometry required by said Advertising Segment whereby said Advertising Segment moves dynamically within said white area of selected picture without interfering with the inherent content from said published picture and said sequence of said insertions is available for said sequential Embedder Process to place said Advertising Segment for insertion into said selected picture giving motion to said Advertising Segment..
